Europäisches Patentamt

European Patent Office

Office européen des brevets

(11) Veröffentlichungsnummer : **0 354 996 B1**

(12) # EUROPÄISCHE PATENTSCHRIFT

(45) Veröffentlichungstag der Patentschrift :
25.11.92 Patentblatt 92/48

(51) Int. Cl.⁵ : **G01B 11/00, G01D 5/26**

(21) Anmeldenummer : **89113064.3**

(22) Anmeldetag : **17.07.89**

(54) **Vorrichtung zur faseroptischen Messung von Absolutpositionen.**

(30) Priorität : **30.07.88 DE 3826067**

(43) Veröffentlichungstag der Anmeldung :
**21.02.90 Patentblatt 90/08**

(45) Bekanntmachung des Hinweises auf die
Patenterteilung :
**25.11.92 Patentblatt 92/48**

(84) Benannte Vertragsstaaten :
**DE FR GB**

(56) Entgegenhaltungen :
**DE-A- 3 511 330
DE-A- 3 643 842
FR-A- 2 194 949
PATENT ABSTRACTS OF JAPAN, Band 7, Nr.
164 (P-211)[1309], 19. Juli 1983; & JP-A-58 70
346 (ASAHI DOW K.K.) 26-04-1983**

(73) Patentinhaber : **DORNIER GMBH
Postfach 1420
W-7990 Friedrichshafen 1 (DE)**

(72) Erfinder : **Sontag, Heinz, Dr. Dipl.-Phys.
Rebhalde 6
W-7990 Friedrichshafen (DE)**
Erfinder : **Elias, Hartmut, Dipl.-Phys.
Unterer Schützenrain 16
W-7758 Meersburg (DE)**
Erfinder : **Ludwig, Wolfgang, Dr. Dipl.-Phys.
Seeblickstrasse 8
CH-8274 Trägerwilen (CH)**
Erfinder : **Fritsch, Walter, Dipl.-Ing.
J.P.-Hebelstrasse 11
W-7778 Markdorf (DE)**
Erfinder : **Eschner, Wolfgang, Dr. Dipl.-Phys.
Baitenhauser Strasse 5
W-7758 Daisendorf (DE)**
Erfinder : **Hundhausen, Rainer, Dr. Dipl.-Phys.
Normannenweg 46
W-7997 Immenstaad (DE)**
Erfinder : **Kratz, Harald, Dipl.-Ing.
Untere Holunderstaffel 15
W-7992 Tettnang (DE)**

(74) Vertreter : **Landsmann, Ralf, Dipl.-Ing.
DORNIER GMBH - Patentabteilung - Kleeweg
3
W-7990 Friedrichshafen 1 (DE)**

**Beschreibung**

Die Erfindung betrifft eine Vorrichtung zur faseroptischen Messung von Absolutpositionen von Objekten beispielsweise in elektromagnetisch abgeschirmten Räumen.

Mehrdimensionale, schnell wiederholbare Positionsmessungen werden mit geeigneten elektronischen Techniken oder mit optischen Techniken über geeignete Kameras durchgeführt. All diesen Techniken ist gemeinsam, daß ein Teil der Meßelektronik in der Nähe des zu vermessenden Objekts sein muß oder eine direkte, visuelle Verbindung gegeben sein muß. Bei hochempfindlichen Messungen, beispielsweise Magnetfeldmessungen am menschlichen Gehirn mit supraleitenden Sensoren, führt dies zu unzulässigen elektromagnetischen Störfeldern in der Nähe des Meßobjekts, oder eine visuelle Beobachtungsmöglichkeit ist aufgrund vorhanderer Abschirmungen nicht gegeben.

Aus der DE-A 35 11 757 ist eine Vorrichtung zur Bestimmung der Position eines eine Lichtquelle aufweisenden Positionsgebers bekannt, die über eine Lichtempfängeranordnung in Gestalt eines Fluoreszenzkollektors verfügt, dessen Sammlerfläche zur Lichtquelle ausgerichtet ist. An gegenüberliegenden Berandungsflächen sind Solarzellen angeordnet, deren Ausgangssignale eine Auswerteeinheit speisen, durch die die Position des bestrahlten Ortes auf der Sammlerfläche bestimmbar ist, indem das Verhältnis der Solarzellenströme an den gegenüberliegenden berandungsflächen zur Koordinatenbestimmung ausgewertet wird.

In der DE-A-36 43 842 ist eine Vorrichtung zur bestimmung der räumlichen Lage eines auf der Oberfläche eines Körpers befindlichen Objektpunkts beschrieben. Der Objektpunkt wird in ein optisch trübes Medium abgebildet und der abgebildete Punkt über den Verlauf des Streu- und Transmissionsverhaltens der Lichtausbreitung im trüben Medium erfaßt. Das Streulicht wird dazu an den Grenzflächen des trüben Mediums in Lichtleiter eingekoppelt und zu einer Auswerteeinheit geführt.

In der FR-A-2 194 949 ist eine Vorrichtung zur bestimmung der Stellung von mehreren Punkten eines Objekts in einem rechtwinkligen, zweidimensionalen Koordinatensystem mittels einer Fotozelle beschrieben. Dabei ist das Objekt an jedem der Punkte mit einer Lichtquelle versehen, die abweichend voneinander intensitätsmoduliert werden und deren Strahlung auf die Fotozelle projiziert wird. Die Ausgangssignale der Fotodiode werden in alle von den Lichtquellen erzeugten Komponenten aufgespalten, wobei diese Komponenten die Stellung der Punkte in dem Koordinatensystem festlegen.

Der Erfindung liegt die Aufgabe zugrunde, eine Vorrichtung anzugeben, mit der die Position eines Objektes feststellbar ist und die in der näheren Umgebung des Meßobjekts elektromagnetische Störfelder vermeidet.

Diese Aufgabe wird durch eine Vorrichtung nach Anspruch 1 gelöst. Ausgestaltungen sind Gegenstand von Unteransprüchen.

Gemäß der Erfindung wird ein faseroptisches Positionsmeßsystem angegeben, bei dem mittels faseroptischer Zuleitungen Anregungslicht zum Meßobjekt gesendet wird und von dort über eine geeignete Optik als kollimierter Strahl abgestrahlt wird. Oder an dem Meßobjekt wird direkt eine geeignete Lampe oder ein Laser befestigt, wovon ein kollimierter Lichtstrahl abgesendet wird. Dieser Strahl trifft auf eine hinreichend große Fluoreszenzfolie oder Fluoreszenzplatte und erzeugt dort Fluoreszenzlicht, das sich zu den Kanten hin ausbreitet. Das Fluoreszenzlicht wird am Rande der Folie in mehrere periodisch angebrachte Lichtleitfasern eingekoppelt. Diese Lichtleitfasern werden am anderen Ende in ähnlicher Geometrie, jedoch üblicherweise in verkleinertem Maßstab, zusammengefaßt und die austretende Lichtverteilung auf einen geeigneten, positionsempfindlichen Detektor gerichtet. Dieser Detektor ist eine Lateraleffekt-Photodiode und liefert ein Ausgangssignal proportional zum Beleuchtungsschwerpunkt, der direkt ein Maß für den Anregungsort darstellt. Durch die Verwendung von Lichtleitfasern kann ein großer Meßbereich von einem erheblich kleineren Detektor erfaßt werden.

Durch Verwendung von drei nicht kollinearen Anregungsstrahlen und Vermessen der Anregungspunkte in zwei Dimensionen können Position und Lage des Meßobjekts in drei Dimensionen bestimmt werden. Dazu werden die drei Strahlen in der Form eines Dreibeins angeordnet. Diese Anregungsstrahlen werden unterschiedlich amplitudenmoduliert und die Detektorsignale entsprechend demoduliert. Aufgrund der faseroptischen Hin- und Rückleitungen können Meß- und Auswerteort bis zu mehreren km voneinander entfernt sein.

Die Erfindung wird anhand von Figuren näher erläutert.

Es zeigen:

Figur 1 schematisch eine eindimensionale Meßanordnung,

Figur 2 schematisch eine zweidimensionale Meßanordnung,

Figur 3 schematisch eine Anordnung mit runder Meßfolie,

Figur 4 schematisch die Anordnung von drei Lichtstrahlen an einem dreidimensional zu vermessenden Körper.

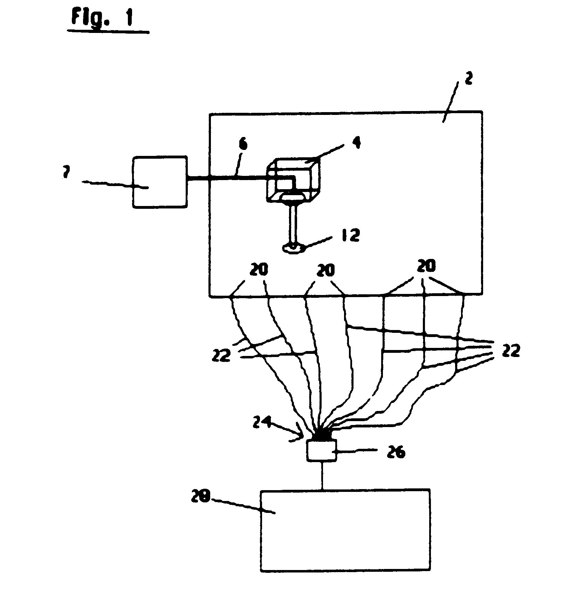

Die Figur 1 zeigt schematisch einen experimentellen Aufbau für einen Anregungsstrahl und die Messung der Position des Anregungsortes in einer Dimension. Licht aus der Anregungslichtquelle 7 wird in eine Lichtleitfaser 6 eingekoppelt, die zum Meßobjekt 4 führt. Dort wird mittels eines geeigneten, hier nicht gezeigten optischen Aufbaus ein Lichtstrahl erzeugt, der auf den Anregungsort 12 auf der Fluoreszenzfolie 2 trifft. Das vom Anregungsort 12 abgestrahlte Fluoreszenzlicht wird zu den Kanten der Fluoreszenzfolie 2 geleitet, wo es an mehreren Positionen 20 in periodisch angeordnete Lichtleitfasern 22 eingekoppelt wird. Die Lichtleitfasern 22 werden am Ende 24 in linearer Geometrie zusammengefasst und das austretende Licht auf einen eindimensional postionsempfindlichen Detektor 26 gerichtet, dessen Signal in der Auswerteeinheit 28 erfasst und in die jeweilige Ortsposition des Anregungspunktes 12 umgerechnet wird.

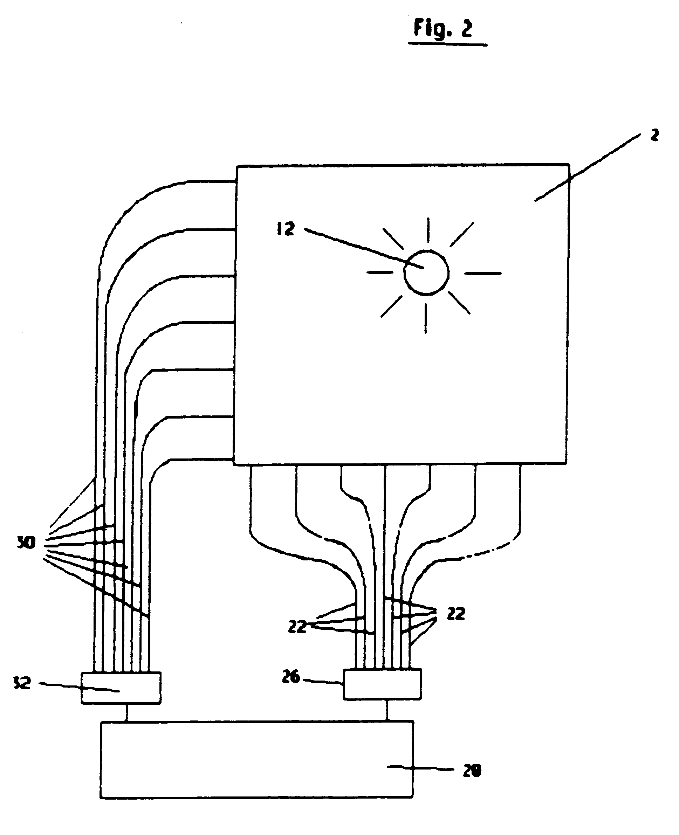

Die Figur 2 zeigt schematisch die Auslegung der Meßanordnung für zweidimensionale Vermessung auf einer rechteckigen Meßfolie. Im Unterschied zu Figur 1 sind zusätzliche, periodisch angeordnete Lichtleiter 30 an der Meßfolie orthogonal zur ersten lichtleiterbestückten Kante angebracht. Die Lichtleiter 30 führen, analog zum Aufbau in Figur 1, zu einem weiteren ortsauflösenden Detektor 32. Die Detektoren 26 und 32 sind mit einer Auswerteschaltung 28 verbunden.

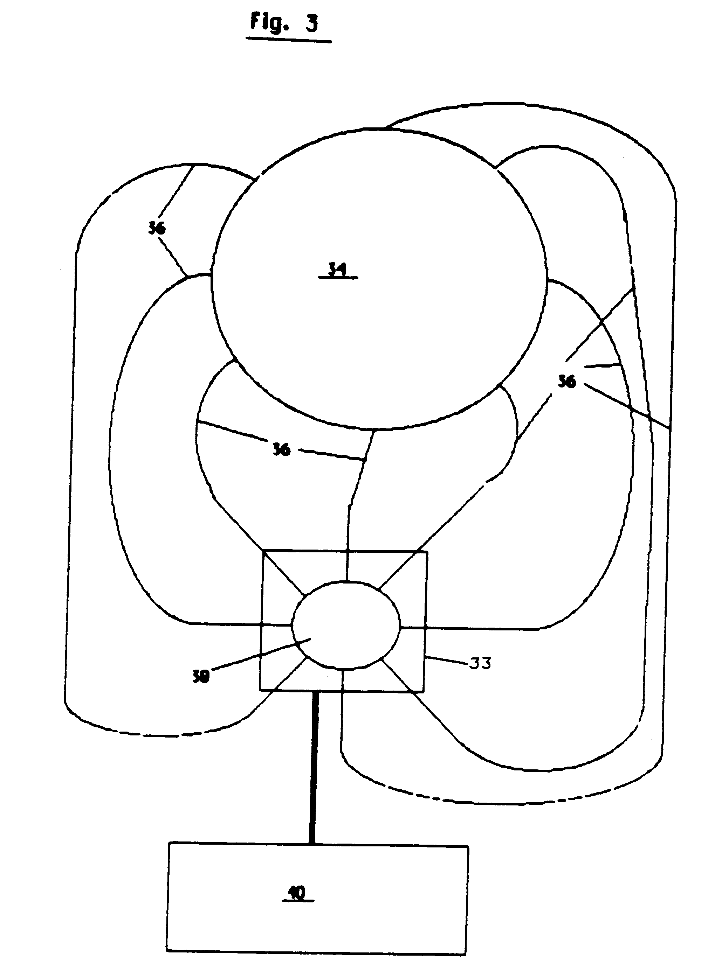

In Figur 3 ist schematisch der Aufbau für eine runde Meßfolie 34 gezeigt, bei der Lichtleiter 36 periodisch am Umfang angebracht sind, die am anderen Ende zu einem Kreis 38 zusammengefasst sind. Die austretende Lichtverteilung wird von einem zweidimensional ortsauflösenden Detektor 33 analysiert, der mit einer Auswerteeinheit 40 verbunden ist.

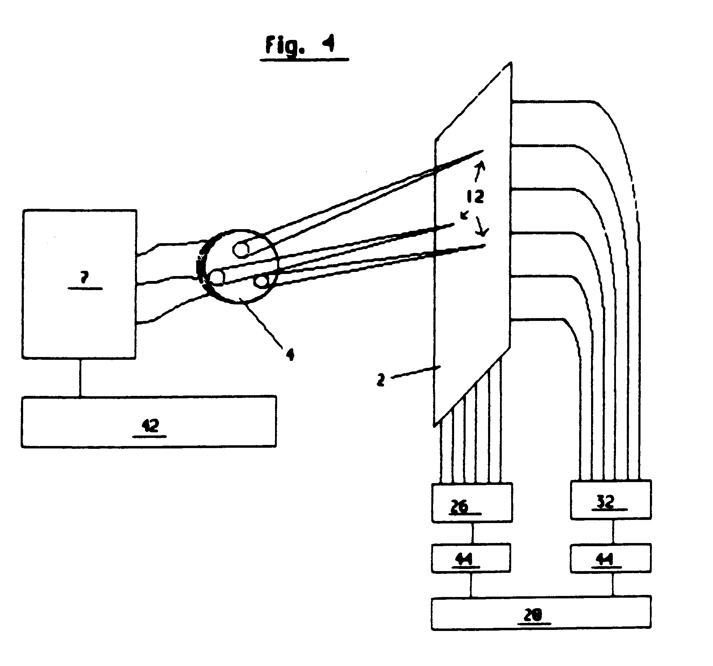

Die Figur 4 zeigt ein Objekt 4, dessen Position und Lage im Raum zu bestimmen ist. Dafür werden an dem Objekt 4 mindestens drei Lichtleitfasern befestigt, deren Lichtstrahlen unterschiedlich amplitudenmoduliert sind. Die Lichtstrahlen erzeugen Lichtflecke 12 auf der Fluoreszenzfolie 2. Der Anregungslichtquelle 7 ist ein geeigneter Amplitudenmodulator 42 zugeordnet und den positionsempfindlichen Detektoren 26 und 32 und der Auswerteeinheit 28 zwei Demodulatoren 44. Der weitere Aufbau ist wie zu Figur 2 beschrieben vorgesehen.

## Patentansprüche

1. Vorrichtung zur faseroptischen Positionsmessung eines Objekts (4) mit Einrichtungen, die Anregungslicht aussenden, und einer weiteren, aus dem Anregungslicht Fluoreszenzlicht erzeugenden Einrichtung (2,34), in der sich das Fluoreszenzlicht ausbreitet und mit einer Auswerteeinheit, **dadurch gekennzeichnet,**
   - daß an der Fluoreszenzlicht erzeugenden Einrichtung (2,34) periodisch Lichtleitfasern (22,30,36) angebracht sind, die das Fluoreszenzlicht abgreifen,
   - diese Lichtleitfasern (22,30,36) zur Auswerteeinheit geführt und dort an einer Lateraleffekt-Photodiode als ortsauflösendem Detektor (26,32,33) in ähnlicher Geometrie zusammengefaßt sind wie an der Fluoreszenzlicht erzeugenden Einrichtung (2,34), wobei der ortsauflösende Detektor (26,32,33) zur Analyse der austretenden Lichtverteilung und zur Angabe eines Maßes für den Beleuchtungsschwerpunkt vorgesehen ist, der ein direktes Maß für den Anregungsort (12) auf der Fluoreszenzlicht erzeugenden Einrichtung (2,34) darstellt.

2. Vorrichtung nach Anspruch 1, dadurch gekennzeichnet, daß die am Objekt (4) Anregungslicht aussendenden Einrichtungen Leuchtdioden, Laser oder mit einer Leuchtdiode oder einem Laser verbundene Lichtleitfasern (6) mit Optiken sind.

3. Vorrichtung nach Anspruch 1, dadurch gekennzeichnet, daß zur dreidimensionalen Positionsbestimmung mehrere unterschiedlich amplitudenmodulierte Anregungslichtstrahlen aussendende Einrichtungen vorgesehen sind, die in festen räumlichen Beziehungen zueinander stehen und daß Vorrichtungen (44) zum Demodulieren der Meßsignale am Detektor (26,32) vorgesehen sind.

## Claims

1. Apparatus for the fibre-optical position finding of an object (4), comprising devices which emit excitation light, and a further device (2,34) which produces fluorescent light from the excitation light and in which the fluorescent light is diffused, and with an evaluation unit, characterised in that
   - there are attached at intervals to the device (2,34) producing the fluorescent light, optical fibres (22,30,36) which tap the fluorescent light;
   - these optical fibres (22,30,36) lead to the evaluation unit, where they are integrated into a lateral effect photodiode as a local dispersing detector (26,32,33) in a geometrical arrangement similar to the device (2,34) producing the fluorescent light, wherein the local dispersing detector (26,32,33) is provided for analysing the emergent distribution of light and for providing a measure for the illumination focus, which constitutes a direct measure for the point of excitation (12) on the device (2,34) producing the fluorescent light.

2. Apparatus according to claim 1, characterised in that the devices emitting excitation light on the object (4) are light-emitting diodes, lasers, or optical fibres (6) attached to a laser or to a light-emitting diode.

**3.** Apparatus according to claim 1, characterised in that a plurality of different devices emitting amplitude-modulated excitation light beams is provided for the purpose of three-dimensional position finding, which units have a fixed spatial relationship to one another; and in that devices (44) are provided for demodulating the measuring signals on the detector (26,32).

## Revendications

**1.** Dispositif à fibres optiques pour mesurer les positions d'un objet (4), comprenant des dispositifs émettant la lumière d'excitation et un autre dispositif (2, 34) générant de la lumière fluorescente à partir de la lumière d'excitation, dans lequel la lumière fluorescente se propage, et une unité d'interprétation, **caractérisé en ce** que

- sur le dispositif (2, 34) générant de la lumière fluorescente sont fixées périodiquement des fibres optiques (22, 30, 36) qui prélèvent la lumière fluorescente,

- ces fibres optiques (22, 30, 36) sont amenées vers l'unité d'interprétation où elles sont groupées sur une photodiode à effet latéral en tant que détecteur à résolution locale (26, 32, 33) dans une géométrie analogue à celle sur le dispositif (2, 34) générant de la lumière fluorescente, le détecteur à résolution locale (26, 32, 33) étant prévu pour l'analyse de la diffusion de la lumière émergente et pour l'indication d'un critère pour le centre de gravité d'éclairement qui représente un critère direct pour le lieu d'excitation (12) sur le dispositif (2, 34) générant de la lumière fluorescente.

**2.** Dispositif selon la revendication 1, caractérisé en ce que les dispositifs émettant de la lumière d'excitation sur l'objet (4) sont des diodes luminescentes, des lasers ou des fibres optiques (6) avec des systèmes optiques reliés à une diode luminescente ou à un laser.

**3.** Dispositif selon la revendication 1, caractérisé en ce que, pour la détermination de positions en trois dimensions, il comprend plusieurs dispositifs émettant des faisceaux de lumière d'excitation à modulation d'amplitude différente qui présentent entre eux des relations spatiales fixes, et qu'il comprend des dispositifs (44) pour la démodulation des signaux de mesure sur le détecteur (26, 32).

## Fig. 1

## Fig. 2

# Fig. 3

## Fig. 4